# EUROPÄISCHE PATENTANMELDUNG

(11) **EP 3 926 155 A1**
(43) Veröffentlichungstag der Anmeldung: **22.12.2021**
(21) Anmeldenummer: 20180315.2
(22) Anmeldetag: 16.06.2020
(51) Int. Cl.: F02B 37/00, F02C 7/045, F02M 35/12, F04C 29/06, F04D 29/66, F02M 35/14, F04D 29/42

(54) **ANSAUGVORRICHTUNG FÜR EINEN VERDICHTER**

(71) Anmelder: ABB Schweiz AG, 5400 Baden (CH)
(72) Erfinder: FELD, Heinz-Jürgen, 5524 Niederwil (CH); JOHO, Marcel, 5105 Auenstein (CH)
(74) Vertreter: Zimmermann & Partner Patentanwälte mbB

(57) **Zusammenfassung**

Die Erfindung betrifft eine Ansaugvorrichtung (1) für einen Verdichter. Die Ansaugvorrichtung (1) umfasst eine Stützstruktur (2) mit einer Vielzahl an Streben (3), die in Umfangsrichtung um eine Achse (4) der Stützstruktur (2) angeordnet sind und sich in radialer Richtung erstrecken. Ferner umfasst die Ansaugvorrichtung (1) eine Vielzahl an ersten Schalldämpferelementen (5), die in radialer Verlängerung der Vielzahl an Streben (3) angeordnet sind. Zusätzlich umfasst die Ansaugvorrichtung (1) eine Vielzahl an zweiten Schalldämpferelementen (6), die jeweils zwischen benachbarten ersten Schalldämpferelementen (5) angeordnet sind. Darüber hinaus betrifft die Erfindung einen Abgasturbolader mit der erfindungsgemäßen Ansaugvorrichtung sowie eine Brennkraftmaschine mit einem solchen Abgasturbolader.

## Beschreibung

### TECHNISCHES GEBIET

Die Erfindung bezieht sich auf das Gebiet der Abgasturbolader für aufgeladene Brennkraftmaschinen. Insbesondere betrifft die Erfindung eine Ansaugvorrichtung für einen Verdichter eines Abgasturboladers.

### TECHNISCHER HINTERGRUND

Für die Leistungssteigerung einer Brennkraftmaschine werden heutzutage standardmäßig Abgasturbolader eingesetzt, mit einer Turbine im Abgastrakt der Verbrennungskraftmaschine und mit einem der Verbrennungskraftmaschine vorgelagerten Verdichter. Die Abgase der Brennkraftmaschine werden dabei in der Turbine entspannt. Die dabei gewonnene Arbeit wird mittels einer Welle auf den Verdichter übertragen, welcher die der Brennkraftmaschine zugeführte Luft verdichtet. Durch die Verwendung der Energie der Abgase zur Verdichtung der dem Verbrennungsprozess in der Brennkraftmaschine zugeführten Luft, können der Verbrennungsprozess und der Wirkungsgrad der Brennkraftmaschine optimiert werden.

Im Betrieb des Abgasturboladers entstehen typischerweise vorwiegend im Verdichterrad Schallwellen unerwünscht hoher Amplitude, die durch den Luftansaugkanal an die Umgebung freigesetzt werden. Diese Schallwellen werden daher üblicherweise mittels einer schalldämpfenden Ansaugvorrichtung, beispielswiese eines Filterschalldämpfers, gedämpft.

Aus dem Stand der Technik sind Filterschalldämpfer bekannt, die typischerweise auf der Ansaugseite eines Verdichters eingesetzt werden, der die Verbrennungsluft komprimiert und einem Verbrennungsmotor zuführt. Angetrieben wird ein derartiger Verdichter von der Abgasturbine eines Abgasturboladers.

Üblicherweise sind die Filterschalldämpfer derart ausgebildet, dass Umgebungsluft durch einen am Umfang eines Filterschalldämpfers angeordneten Filter in einen mit Dämpfungselementen ausgestatteten Innenraum des Filterschalldämpfers eingeleitet werden kann, anschließend an den Dämpfungselementen vorbei strömt, und dabei zum Verdichterrad, von dem entgegen der Luftströmung Schallwellen ausgehen, durch Leitelemente umgelenkt wird. Die Schalldämpfung erfolgt an den Dämpfungselementen dissipativ, indem die Schallenergie unmittelbar durch poröse oder faserige Absorptionsmaterialien, aus denen die Dämpfungselemente im Wesentlichen aufgebaut sind, in Wärme umgesetzt wird.

Es hat sich herausgestellt, dass die aus dem Stand der Technik bekannten schalldämpfenden Ansaugvorrichtungen gewisse Nachteile hinsichtlich erforderlicher Bauraumgröße als auch hinsichtlich der auftretenden Druckverluste aufweisen.

### KURZE DARSTELLUNG DER ERFINDUNG

Die Aufgabe der vorliegenden Erfindung besteht darin, eine Ansaugvorrichtung, einen Abgasturbolader und eine Brennkraftmaschine bereitzustellen, die hinsichtlich mindestens einem der aus dem Stand der Technik bekannten Nachteile verbessert sind. Insbesondere besteht eine Aufgabe der vorliegenden Erfindung darin, eine möglichst kompakte Ansaugvorrichtung für einen Verdichter bereitzustellen, beispielsweise eines Verdichters eines Abgasturboladers einer Brennkraftmaschine, mit welcher ein möglichst geringer Druckverlust realisiert werden kann. Eine weitere Aufgabe der vorliegenden Erfindung besteht darin, eine Ansaugvorrichtung bereitzustellen, welche die akustischen Forderungen hinsichtlich einer möglichst geringen Geräuschentwicklung erfüllt.

Zur Lösung der obengenannten Aufgabe wird eine Ansaugvorrichtung gemäß des unabhängigen Anspruchs 1 bereitgestellt. Weitere Aspekte, Vorteile und Merkmale der vorliegenden Erfindung sind den abhängigen Patentansprüchen, der Beschreibung und den beiliegenden Figuren zu entnehmen.

Gemäß einem Aspekt der Erfindung wird eine Ansaugvorrichtung für einen Verdichter bereitgestellt. Die Ansaugvorrichtung umfasst eine Stützstruktur mit einer Vielzahl an Streben, die in Umfangsrichtung um eine Achse der Stützstruktur angeordnet sind und sich in radialer Richtung erstrecken. Ferner umfasst die Ansaugvorrichtung eine Vielzahl an ersten Schalldämpferelementen, die in radialer Verlängerung der Vielzahl an Streben angeordnet sind. Zusätzlich umfasst die Ansaugvorrichtung eine Vielzahl an zweiten Schalldämpferelementen, die jeweils zwischen benachbarten ersten Schalldämpferelementen angeordnet sind.

Somit wird vorteilhafterweise eine Ansaugvorrichtung bereitgestellt, die gegenüber den aus dem Stand der Technik bekannten Ansaugvorrichtungen verbessert ist. Insbesondere wird durch die erfindungsgemäße Ansaugvorrichtung eine Ansaugvorrichtung bereitgestellt, welche derart ausgelegt ist, dass die Ansaugvorrichtung mit weitgehend konstanter Strömungsgeschwindigkeit durchströmt werden kann. Ferner können mit der erfindungsgemäßen Ansaugvorrichtung Abströmwirbel minimiert werden und Querschnittssprünge klein gehalten werden, so dass Druckverluste vorteilhafterweise minimiert werden können. Darüber hinaus wird eine Ansaugvorrichtung bereitgestellt, welche eine kompakte Bauraumgröße und eine kostengünstige Herstellung ermöglicht und die akustischen Forderungen hinsichtlich einer möglichst geringen Geräuschentwicklung erfüllt.

Gemäß einem zweiten Aspekt der Erfindung wird ein Abgasturbolader mit einer Ansaugvorrichtung gemäß einer der hierin beschriebenen Ausführungsformen bereitgestellt, wobei die Stützstruktur der erfindungsgemäßen Ansaugvorrichtung mit einem Verdichtergehäuse des Abgasturboladers verbunden ist. Somit kann vorteilhafterweise ein verbesserter Abgasturbolader bereitgestellt werden.

Ein dritter Aspekt der Erfindung betrifft eine Brennkraftmaschine mit einem Abgasturbolader gemäß einer der hierin beschrieben Ausführungsformen. Somit kann vorteilhafterweise eine verbesserte Brennkraftmaschine bereitgestellt werden.

### KURZBESCHREIBUNG DER FIGUREN

Im Weiteren soll die Erfindung anhand von in Figuren dargestellten Ausführungsbeispielen erläutert werden, aus denen sich weitere Vorteile und Abwandlungen ergeben. Hierbei zeigt:
- Figur 1: eine schematische perspektivische Schnittansicht einer Ansaugvorrichtung gemäß hierin beschriebenen Ausführungsformen, die auf einer Ansaugseite eines Verdichters angeordnet ist; und
- Figur 2: einen Ausschnitt einer schematischen axialen Schnittansicht einer Ansaugvorrichtung gemäß hierin beschriebenen Ausführungsformen.

### DETAILLIERTE BESCHREIBUNG DER FIGUREN

Im Folgenden wird nun ausführlich auf die verschiedenen Ausführungsformen eingegangen, von denen in jeder Abbildung ein oder mehrere Beispiele dargestellt sind. Jedes Beispiel dient der Erläuterung und ist nicht als Einschränkung zu verstehen. Beispielsweise können Merkmale, die als Teil einer Ausführungsform dargestellt oder beschrieben sind, auf oder in Verbindung mit jeder anderen Ausführungsform verwendet werden, um eine weitere Ausführungsform zu erhalten. Es ist beabsichtigt, dass die vorliegende Offenlegung solche Modifikationen und Variationen einschließt.

In der folgenden Beschreibung der Zeichnungen beziehen sich die gleichen Referenznummern auf die gleichen oder ähnlichen Komponenten. Im Allgemeinen werden nur die Unterschiede in Bezug auf die einzelnen Ausführungsformen beschrieben. Sofern nicht anders angegeben, kann sich die Beschreibung eines Teils oder Aspekts in einer Ausführungsform auch auf ein entsprechendes Teil oder einen entsprechenden Aspekt in einer anderen Ausführungsform beziehen.

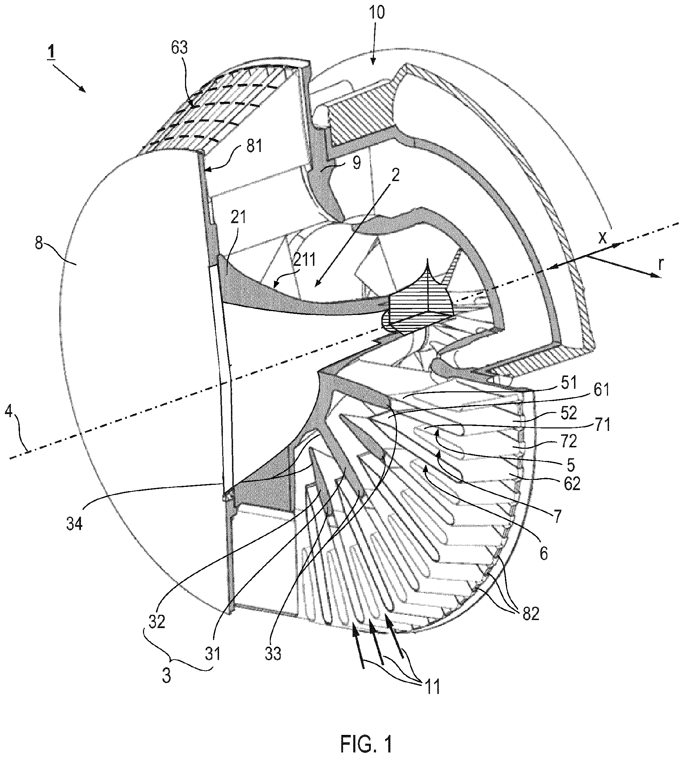

Figur 1 zeigt eine schematische perspektivische Schnittansicht einer Ansaugvorrichtung 1 für einen Verdichter gemäß hierin beschriebenen Ausführungsformen. Das Verdichtergehäuse 10 des Verdichters ist schematisch angedeutet. Die Ansaugvorrichtung 1 ist auf einer Ansaugseite eines Verdichters angeordnet.

Gemäß einer Ausführungsform, die mit anderen hierin beschriebenen Ausführungsformen kombiniert werden kann, umfasst die Ansaugvorrichtung 1 eine Stützstruktur 2 mit einer Vielzahl an Streben 3. Die Vielzahl an Streben 3 ist in Umfangsrichtung um eine Achse 4 der Stützstruktur 2 angeordnet. Die Achse 4 der Stützstruktur 2 erstreckt sich in axialer Richtung x. Die Vielzahl an Streben 3 erstreckt sich in radialer Richtung r. Typischerweise ist die Achse 4 der Stützstruktur 2 eine zentrale Achse der Stützstruktur 2. Wie beispielhaft in Figur 1 dargestellt ist, umfasst die Ansaugvorrichtung 1 eine Vielzahl an ersten Schalldämpferelementen 5. Die Vielzahl an ersten Schalldämpferelementen 5 ist in radialer Verlängerung der Vielzahl an Streben 3 angeordnet. Ferner umfasst die Ansaugvorrichtung 1 eine Vielzahl an zweiten Schalldämpferelementen 6, die jeweils zwischen benachbarten ersten Schalldämpferelementen 5 angeordnet sind. Die ersten Schalldämpferelemente 5 und die zweiten Schalldämpferelemente 6 sind radial, in Umfangsrichtung um die Achse 4 der Stützstruktur 2 angeordnet.

Es sei angemerkt, dass die hierin beschriebenen Schalldämpferelemente auch als Kulissen bezeichnet werden können. Wie aus Figur 1 ersichtlich ist wird die Anzahl der Kulissen von Innen (d.h. von der Achse 4) nach Außen größer, so dass die Strömungsquerschnitte in radialer Richtung zwischen den Kulissen vorteilhafterweise im Wesentlichen konstant ist.

Somit wird vorteilhafterweise eine Ansaugvorrichtung bereitgestellt, die gegenüber den aus dem Stand der Technik bekannten Ansaugvorrichtungen verbessert ist. Insbesondere ist die Ansaugvorrichtung vorteilhafterweise derart ausgelegt, dass die Ansaugvorrichtung mit weitgehend konstanter Strömungsgeschwindigkeit durchströmt werden kann. Ferner ermöglicht die Ansaugvorrichtung eine Minimierung von Abströmwirbel und Querschnittssprüngen, wodurch Druckverluste vorteilhafterweise reduziert werden können. In diesem Zusammenhang sei angemerkt, dass prinzipiell jedes Element, welches in die Strömung eingebaut ist, zu Druckverlusten führt. Diese entstehen aufgrund verschiedener Mechanismen, wie zum Beispiel Oberflächenreibung und Abströmwirbel. Die Druckverluste steigen stark mit zunehmender Strömungsgeschwindigkeit. Unter diesem Gesichtspunkt sind die hierin beschriebenen Ausführungsformen der Ansaugvorrichtung strömungsmechanisch verbessert.

Darüber hinaus wird eine Ansaugvorrichtung bereitgestellt, welche eine kompakte Bauraumgröße und eine kostengünstige Herstellung ermöglicht und die akustischen Forderungen hinsichtlich einer möglichst geringen Geräuschentwicklung erfüllt.

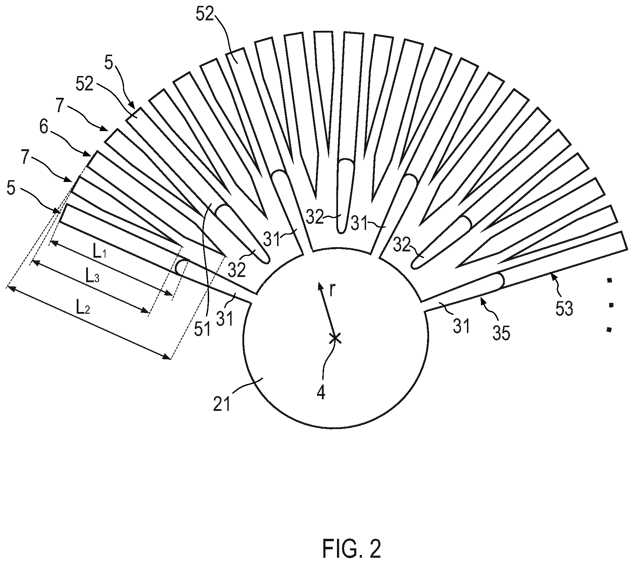

Gemäß einer Ausführungsform, die mit anderen hierin beschriebenen Ausführungsformen kombiniert werden kann, stehen radial nach Innen gerichtete Enden 51 der Vielzahl an ersten Schalldämpferelementen 5 jeweils mit radial nach Außen gerichtete Enden 33 der Vielzahl an Streben 3 derart in Kontakt, dass eine kontinuierliche Strömungsfläche von den Seitenflächen 53 der ersten Schalldämpferelemente und den Seitenflächen 35 der Streben 3 gebildet wird, wie es beispielhaft in Figur 2 gezeigt ist. Somit bilden die Streben 3 der Stützstruktur 2 und die ersten Schalldämpferelementen 5 eine gemeinsame geometrische Form, was sich positiv auf die Minimierung von Druckverlusten auswirkt, dass Strömungsablösungen vermieden werden können.

Gemäß einer Ausführungsform, die mit anderen hierin beschriebenen Ausführungsformen kombiniert werden kann, können die radial nach Innen gerichtete Enden 51 der Vielzahl an ersten Schalldämpferelementen 5 jeweils mit den radial nach Außen gerichtete Enden 33 der Vielzahl an Streben 3 formschlüssig in Kontakt stehen.

Gemäß einer Ausführungsform, die mit anderen hierin beschriebenen Ausführungsformen kombiniert werden kann, umfasst die Ansaugvorrichtung 1 ferner eine Vielzahl an dritten Schalldämpferelementen 7, wie es beispielhaft in den Figuren 1 und 2 dargestellt ist. Die dritten Schalldämpferelementen 7 sind typischerweise jeweils zwischen einem ersten Schalldämpferelement 5 und einem zweiten Schalldämpferelement 6 angeordnet. Die dritten Schalldämpferelemente 7 weisen eine geringere radiale Ausdehnung auf als die zweiten Schalldämpferelemente 6.

Gemäß einer Ausführungsform, die mit anderen hierin beschriebenen Ausführungsformen kombiniert werden kann, umfasst die Stützstruktur 2 ein zentrales kegelartiges Element 21, wie es beispielhaft in Figur 1 dargestellt ist. Die Vielzahl an Streben 3 ist typischerweise mit einer äußeren Mantelfläche 211 des zentralen kegelartigen Elements 21 verbunden. Beispielsweise, können die Streben 3 integral mit der äußeren Mantelfläche 211 des zentralen kegelartigen Elements 21 verbunden sein. Insbesondere können das zentrale kegelartige Element 21 und die Vielzahl an Streben 3 in Form eines Gussteils oder Frästeils ausgebildet sein. Alternativ können die Streben 3 mittels einer Schraubverbindung oder Schweißverbindung mit dem zentralen kegelartigen Element 21 verbunden sein.

Gemäß einer Ausführungsform, die mit anderen hierin beschriebenen Ausführungsformen kombiniert werden kann, ist das zentrale kegelartige Element 21 ein hohl-kegelartiges Element. Typischerweise ist die äußere Mantelfläche 211 des kegelartigen Elements 21 konkav ausgebildet, wie es beispielhaft in Figur 1 gezeigt ist.

Gemäß einer Ausführungsform, die mit anderen hierin beschriebenen Ausführungsformen kombiniert werden kann, umfasst die Vielzahl an Streben 3 eine erste Gruppe an ersten Streben 31 und eine zweite Gruppe an zweiten Streben 32, wie es beispielhaft in den Figuren 1 und 2 gezeigt ist. Typischerweise weisen die ersten Streben 31 eine längere axiale Ausdehnung auf als die zweiten Streben 32. Beispielsweise können die erste Gruppe an ersten Streben 31 und die zweite Gruppe an zweiten Streben 32 jeweils die Hälfte der Gesamtanzahl an Streben 3 aufweisen. Typischerweise sind die ersten Streben 31 und die zweiten Streben 32 in Umfangsrichtung abwechselnd angeordnet.

Gemäß einer Ausführungsform, die mit anderen hierin beschriebenen Ausführungsformen kombiniert werden kann, weisen die Vielzahl an Streben 3 jeweils ein radial inneres Ende 34 mit einer Verjüngung auf, wie es beispielhaft in Figur 1 gezeigt ist. Mit anderen Worten, die Dicke der Streben 3 reduziert sich zur Achse 4 der Stützstruktur 2 hin.

Alternative oder zusätzlich können die Vielzahl an zweiten Schalldämpferelementen 6 jeweils ein radial inneres Ende 61 mit einer Verjüngung aufweisen, wie es ebenfalls in Figur 1 gezeigt ist. Mit anderen Worten, die Dicke der Schalldämpferelemente 6 reduziert sich zur Achse 4 der Stützstruktur 2 hin. Oder anders ausgedrückt, die Schalldämpferelemente 6 weisen eine abströmseitige Verjüngung auf. Die Strömungsrichtung der Strömung zwischen den Schalldämpferelementen der Ansaugvorrichtung ist beispielhaft durch die Pfeile 11 in Fig. 1 dargestellt.

Gemäß einer Ausführungsform, die mit anderen hierin beschriebenen Ausführungsformen kombiniert werden kann, verjüngen sich die dritten Schalldämpferelemente 7 radial nach Innen hin, wie es beispielhaft in Figur 2 gezeigt ist. Mit anderen Worten, die dritten Schalldämpferelemente 7 weisen eine abströmseitige Verjüngung auf.

Gemäß einer Ausführungsform, die mit anderen hierin beschriebenen Ausführungsformen kombiniert werden kann, sind die zweiten Schalldämpferelemente 6 jeweils zumindest teilweise zwischen benachbarten Streben 3 angeordnet, wie es beispielhaft in den Figuren 1 und 2 dargestellt ist.

Gemäß einer Ausführungsform, die mit anderen hierin beschriebenen Ausführungsformen kombiniert werden kann, umfasst die Ansaugvorrichtung 1 ferner ein Frontelement 8 und ein Rückelement 9, wie es beispielhaft in Figur 1 gezeigt ist. Das Frontelement 8 kann eine Frontplatte sein. Zum Beispiel kann die Frontplatte in Form einer Scheibe, insbesondere einer kreisrunden Scheibe, ausgebildet sein, wie es beispielhaft in Figur 1 dargestellt ist. Das Rückelement 9 kann eine Rückplatte sein, insbesondere eine Rückplatte mit einer zentralen Öffnung. Die Rückplatte kann in Form einer Scheibe, insbesondere einer kreisrunden Scheibe, mit zentraler Öffnung ausgebildet sein, wie es in Figur 1 dargestellt ist. Die ersten Schalldämpferelemente 5 können radial einschiebbar zwischen dem Frontelement 8 und dem Rückelement 9 montierbar sein. Alternativ oder zusätzlich können die dritten Schalldämpferelemente 7 radial einschiebbar zwischen dem Frontelement 8 und dem Rückelement 21 montierbar sein. Die zweiten Schalldämpferelemente 6 können axial einschiebbar montierbar sein. Alternativ, können die zweiten Schalldämpferelemente 6 radial einschiebbar zwischen dem Frontelement 8 und dem Rückelement 21 montierbar sein.

Gemäß einer Ausführungsform, die mit anderen hierin beschriebenen Ausführungsformen kombiniert werden kann, weist das Frontelement 8 eine erste Positionierungsvorrichtung 81 für die ersten Schalldämpferelemente 5 und/oder die zweiten Schalldämpferelemente (6) und/oder die dritten Schalldämpferelemente 7 auf. Ferner kann das Rückelement 9 eine zweite Positionierungsvorrichtung 82 für die ersten Schalldämpferelemente 5 und/oder die dritten Schalldämpferelemente 7 aufweisen. Typischerweise liegt die erste Führungsvorrichtung 81 der zweiten Führungsvorrichtung gegenüber.

Gemäß einer Ausführungsform, die mit anderen hierin beschriebenen Ausführungsformen kombiniert werden kann, liegen radial äußere Enden 51 der ersten Schalldämpferelemente 5, radial äußere Enden 61 der zweiten Schalldämpferelemente 6 und radial äußere Enden 71 der dritten Schalldämpferelemente 7 auf einer gemeinsamen Mantelfläche 63, wie es beispielhaft in Figur 1 dargestellt ist. Auf der gemeinsamen Mantelfläche kann beispielsweise ein Filterblech, insbesondere ein Lochblech, angeordnet sein.

Gemäß einer Ausführungsform, die mit anderen hierin beschriebenen Ausführungsformen kombiniert werden kann, weisen die ersten Schalldämpferelemente 5 eine erste Länge L1, die zweiten Schalldämpferelemente 6 eine zweite Länge L2, und die dritten Schalldämpferelemente 7 eine dritte Länge L3 auf. Typischerweise ist die dritte Länge L3 kleiner als die erste Länge L1. Die erste Länge L1 kann kleiner als die zweite Länge sein. Alternative, kann die zweite Länge L2 kleiner als die erste Länge L1 sein. Mathematisch ausgedrückt kann eine der folgenden Ungleichung erfüllt sein: (1) L3<L1<L2 oder (2) L3<L2<L1.

Gemäß einer Ausführungsform, die mit anderen hierin beschriebenen Ausführungsformen kombiniert werden kann, umfassen die hierin beschriebenen ersten Schalldämpferelemente 5 und/oder die hierin beschriebenen zweiten Schalldämpferelemente 6 und/oder die hierin beschriebenen dritten Schalldämpferelemente 7 jeweils ein Absorptionselement das typischerweise aus einem Dämpfungsmaterial besteht. Zum Beispiel kann das Dämpfungsmaterial ein Schaumstoffmaterial, ein Filz oder ein Vlies, insbesondere ein Polyestervlies, sein. Das Absorptionselement ist typischerweise zumindest teilweise von einem dämpfenden und absorbierenden Schutz umgeben. Insbesondere kann der dämpfende und absorbierende Schutz ein Dämpfungsblech sein, das beispielsweise derart ausgebildet ist, dass ein Zwischenraum zwischen den Seitenwänden eines Dämpfungselements gebildet wird. In diesem Zwischenraum kann das Absorptionselement eingebracht sein.

Wie aus den hierin beschriebenen Ausführungsformen hervorgeht wird vorteilhafterweise eine Ansaugvorrichtung, ein Abgasturbolader und eine Brennkraftmaschine bereitgestellt, die gegenüber dem Stand der Technik verbessert sind. Insbesondere, wird eine kompakte Ansaugvorrichtung für einen Verdichter bereitgestellt, mit welcher im Vergleich zum Stand der Technik ein geringerer Druckverlust realisiert werden kann, wobei die akustischen Forderungen hinsichtlich einer möglichst geringen Geräuschentwicklung erfüllt werden können. Gemäß den hierin beschriebenen Ausführungsformen, wird vorteilhafterweise im schalldämpfenden Bereich der Ansaugvorrichtung in jedem Querschnitt die Strömungsgeschwindigkeit nahezu konstant gehalten, was zu einer Minimierung der Strömungsverluste führt. Der vorhandene Bauraum kann optimal mit Schalldämpferelemente bestückt werden, sodass eine optimale akustische Dämpfung realisiert werden kann. An dieser Stelle sei erwähnt, dass die hierin beschriebene Ansaugvorrichtung auch ohne Schalldämpferelemente verwendet werden kann, und nur die Stützstruktur 2 mit den Streben 3 umfasst. Dies kann beispielsweise dann in Betracht gezogen werden, wenn Geräuschentwicklung keine Rolle spielt und daher keine Schaldämpfung notwendig ist.

Somit kann mittels der hierin beschriebenen Ausführungsformen eine Ansaugvorrichtung für einen Turbolader bereitgestellt werden, welche die Forderungen einer kostengünstigen Herstellung, einem geringen Bauvolumen, einem geringen Druckverlust und einer optimalen Schalldämpfung erfüllt.

Durch die Verwendung der Ansaugvorrichtung gemäß den hierin beschriebenen Ausführungsformen für einen Turbolader einer Brennkraftmaschine, kann so somit ein verbesserter Turbolader und damit eine verbesserte Brennkraftmaschine bereitgestellt werden.

### BEZUGZEICHENLISTE

- **1**: Ansaugvorrichtung
- **11**: Strömungsrichtung der Strömung zwischen den Schalldämpferelementen
- **2**: Stützstruktur
- **21**: zentrales kegelartiges Element der Stützstruktur
- **211**: äußere Mantelfläche des zentralen kegelartigen Elements
- **3**: Vielzahl an Streben
- **31**: ersten Streben
- **32**: zweite Streben
- **33**: radial nach Außen gerichtete Enden der Vielzahl an Streben
- **34**: radial Innere Ende der zweiten Streben
- **35**: Seitenfläche der Vielzahl an Streben
- **4**: Achse der Stützstruktur
- **5**: erste Schalldämpferelemente
- **51**: radial nach Innen gerichtete Enden der ersten Schalldämpferelemente
- **52**: radial äußere Enden der ersten Schalldämpferelemente
- **53**: Seitenfläche der ersten Schalldämpferelemente
- **6**: zweite Schalldämpferelemente
- **61**: radial Innere Ende der zweiten Schalldämpferelemente
- **62**: radial äußere Enden der zweiten Schalldämpferelemente
- 63: Mantelfläche
- **7**: dritte Schalldämpferelemente
- **71**: radial Innere Ende der dritten Schalldämpferelemente
- **72**: radial äußere Enden der dritten Schalldämpferelemente
- **8**: Frontelement
- **81**: erste Positionierungsvorrichtung
- **82**: zweite Positionierungsvorrichtung
- **9**: Rückelement
- **10**: Verdichtergehäuse
- **L₁**: erste Länge der erste Schalldämpferelemente
- **L₂**: zweite Länge der zweiten Schalldämpferelemente
- **L₃**: dritte Länge der zweiten Schalldämpferelemente
- **r**: radiale Richtung
- **x**: axiale Richtung

## Patentansprüche

1. Ansaugvorrichtung (1) für einen Verdichter, umfassend:
- eine Stützstruktur (2) mit einer Vielzahl an Streben (3), die in Umfangsrichtung um eine Achse (4) der Stützstruktur (2) angeordnet sind und sich in radialer Richtung erstrecken,
- eine Vielzahl an ersten Schalldämpferelementen (5), die in radialer Verlängerung der Vielzahl an Streben (3) angeordnet sind, und
- eine Vielzahl an zweiten Schalldämpferelementen (6), die jeweils zwischen benachbarten ersten Schalldämpferelementen (5) angeordnet sind.

2. Ansaugvorrichtung (1) nach Anspruch 1, wobei radial nach Innen gerichtete Enden (51) der Vielzahl an ersten Schalldämpferelementen (5) jeweils mit radial nach Außen gerichtete Enden (33) der Vielzahl an Streben (3) derart in Kontakt stehen, dass eine kontinuierliche Strömungsfläche von den Seitenflächen (53) der ersten Schalldämpferelemente und den Seitenflächen (35) der Streben (3) gebildet wird, insbesondere wobei die radial nach Innen gerichtete Enden (51) der Vielzahl an ersten Schalldämpferelementen (5) jeweils mit den radial nach Außen gerichtete Enden (33) der Vielzahl an Streben (3) formschlüssig in Kontakt stehen.

3. Ansaugvorrichtung (1) nach Anspruch 1 oder 2, ferner umfassend eine Vielzahl an dritten Schalldämpferelementen (7), die jeweils zwischen einem ersten Schalldämpferelement (5) und einem zweiten Schalldämpferelement (6) angeordnet sind, wobei die dritten Schalldämpferelemente (7) eine geringere radiale Ausdehnung aufweisen als die zweiten Schalldämpferelementen (6).

4. Ansaugvorrichtung (1) nach einem der Ansprüche 1 bis 3, wobei die Stützstruktur (2) ein zentrales kegelartiges Element (21) umfasst, und wobei die Vielzahl an Streben (3) mit einer äußeren Mantelfläche (211) des zentralen kegelartigen Elements (21) verbunden, insbesondere integral verbunden, sind.

5. Ansaugvorrichtung (1) nach Anspruch 4, wobei das zentrale kegelartige Element (21) ein hohl-kegelartiges Element ist, und wobei die äußere Mantelfläche (211) konkav ist.

6. Ansaugvorrichtung (1) nach einem der Ansprüche 1 bis 5, wobei die Vielzahl an Streben (3) eine erste Gruppe an ersten Streben (31) und eine zweite Gruppe an zweiten Streben (32) umfasst, wobei die ersten Streben (31) eine längere axiale Ausdehnung aufweisen als die zweiten Streben (32).

7. Ansaugvorrichtung (1) nach einem der Ansprüche 1 bis 6, wobei die Vielzahl an Streben (3) jeweils ein radial inneres Ende (34) mit einer Verjüngung aufweisen, und/oder wobei die Vielzahl an zweiten Schalldämpferelementen (6) jeweils ein radial inneres Ende (61) mit einer Verjüngung aufweisen.

8. Ansaugvorrichtung (1) nach einem der Ansprüche 3 bis 7, wobei sich die dritten Schalldämpferelemente (7) radial nach Innen hin verjüngen.

9. Ansaugvorrichtung (1) nach einem der Ansprüche 1 bis 8, wobei die zweiten Schalldämpferelemente (6) jeweils zumindest teilweise zwischen benachbarten Streben (3) angeordnet sind.

10. Ansaugvorrichtung (1) nach einem der Ansprüche 1 bis 9, ferner umfassend ein Frontelement (8) und ein Rückelement (9), wobei die ersten Schalldämpferelemente (5) und/oder die zweiten Schalldämpferelemente (6) und/oder die dritten Schalldämpferelement (7) radial einschiebbar zwischen dem Frontelement (8) und dem Rückelement (9) montierbar sind.

11. Ansaugvorrichtung (1) nach Anspruch 10, wobei das Frontelement (8) eine erste Positionierungsvorrichtung (81) für die ersten Schalldämpferelemente (5) und/oder die zweiten Schalldämpferelemente (6) und/oder die dritten Schalldämpferelemente (7) aufweist, und wobei das Rückelement (9) eine zweite Positionierungsvorrichtung (82) für die ersten Schalldämpferelemente (5) und/oder die zweiten Schalldämpferelemente (6) und/oder die dritten Schalldämpferelemente (7) aufweist, und wobei die erste Führungsvorrichtung (81) der zweiten Führungsvorrichtung (82) gegenüberliegt.

12. Ansaugvorrichtung (10) nach einem der Ansprüche 3 bis 11, wobei radial äußere Enden (51) der ersten Schalldämpferelemente (5), radial äußere Enden (61) der zweiten Schalldämpferelemente (6) und radial äußere Enden (71) der dritten Schalldämpferelemente (7) auf einer gemeinsamen Mantelfläche liegen.

13. Ansaugvorrichtung (10) nach einem der Ansprüche 1 bis 12, wobei die ersten Schalldämpferelemente (5) eine erste Länge L1, die zweiten Schalldämpferelemente (6) eine zweite Länge L2, und die dritten Schalldämpferelemente (7) eine dritte Länge L3 aufweisen, wobei die dritte Länge L3 kleiner ist als die erste Länge L1, und wobei die erste Länge L1 kleiner ist als die zweite Länge (L3<L1<L2), oder wobei die zweite Länge L2 kleiner ist als die erste Länge L1 (L3<L2<L1).

14. Abgasturbolader mit einer Ansaugvorrichtung (1) gemäß einem der Ansprüche 1 bis 13, wobei die Stützstruktur (20) der Ansaugvorrichtung (1) mit einem Verdichtergehäuse (10) des Abgasturboladers verbunden ist.

15. Brennkraftmaschine mit einem Abgasturbolader gemäß Anspruch 14.
